(19) Europäisches Patentamt
European Patent Office
Office européen des brevets

(11) **EP 3 249 483 B1**

(12) **EUROPEAN PATENT SPECIFICATION**

(45) Date of publication and mention
of the grant of the patent:
**20.05.2020 Bulletin 2020/21**

(51) Int Cl.:
***G05B 23/02*** *(2006.01)*   ***G06N 5/04*** *(2006.01)*

(21) Application number: **15878662.4**

(86) International application number:
**PCT/JP2015/000243**

(22) Date of filing: **21.01.2015**

(87) International publication number:
**WO 2016/116961 (28.07.2016 Gazette 2016/30)**

(54) **INFORMATION PROCESSING DEVICE AND INFORMATION PROCESSING METHOD**

INFORMATIONSVERARBEITUNGSVORRICHTUNG UND
INFORMATIONSVERARBEITUNGSVERFAHREN

DISPOSITIF DE TRAITEMENT D'INFORMATIONS ET PROCÉDÉ DE TRAITEMENT
D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.11.2017 Bulletin 2017/48**

(73) Proprietor: **Mitsubishi Electric Corporation
Chiyoda-ku
Tokyo 100-8310 (JP)**

(72) Inventor: **TOYAMA, Yasuhiro
Tokyo 100-8310 (JP)**

(74) Representative: **Pfenning, Meinig & Partner mbB
Patent- und Rechtsanwälte
Theresienhöhe 11a
80339 München (DE)**

(56) References cited:
**WO-A1-2008/106071    WO-A1-2012/073289
WO-A1-2014/033433    JP-A- H0 916 250
JP-A- 2002 341 909    JP-A- 2009 075 692
JP-A- 2010 211 440    JP-A- 2011 170 518
JP-A- 2013 008 092    US-A1- 2006 206 230
US-A1- 2009 076 634**

**Description**

Technical Field

The present invention relates to a technique to obtain the estimated time of anomaly occurrence based on values acquired by sensors installed in a control system for an elevator, a plant facility, manufacturing machinery, etc.

Background Art

A control system for a large plant like a nuclear power plant, an elevator, or manufacturing machinery etc. has sensors, and detects an anomaly based on signals the sensors acquired. Since an earlier anomalous-value signal is often followed by another influenced anomalous-value signal, a technique to identify an inferred anomaly-origin-representing signal representing the origin of an anomaly based on signals whose anomalous values are detected is disclosed.

For example, Patent Document 1 discloses a system to pick up and list in advance "propagation paths" which represent the order for secondary signals to turn to show anomalous values in the case of anomaly occurrence by taking physical causes and effects relating signals into account. It chooses "propagation paths" including detected anomalous value signals from the list to identify a signal at the beginning of the chosen "propagation paths" as the inferred anomaly-origin-representing signal.

In another example of Patent Document 2, the semiconductor fabrication system gives the order of priority for detected signals when there are multiple anomalous value signals detected. The order of priority is defined for the multiple anomalous value signals detected, as in preassigned order of importance, as in detection time order, or as in order of occurrence frequency.

US 2009/076634 A1 discloses a plant alarm apparatus having: plant data input means for periodically taking in plant data; a latest plant data value table for temporarily storing latest values of the plant data; plant data recording means for taking out the latest values of the data of the latest plant data value table and storing them in a plant history data table; alarm-triggering value alteration means for updating the points for detecting plant abnormality in an alarm-triggering value registration table in response to a request by an operator; alarm-triggering condition editing means for registering alarm-triggering conditions of points showing a foretoken of abnormality; deviation-from-limit-value determining means for reading the stored values of the alarm-triggering value registration table and the alarm-triggering condition table and comparing the limit values of the points for detecting abnormality;; and alarm notification output means for outputting the outcome of the comparison.

US 2006/206230 A1 discloses a method for detecting abnormal characteristic values of a plurality of products sequentially manufactured in the same manufacturing line, it is determined whether or not a successive-decrease (or increase) tendency has occurred in a plurality of sequentially-obtained characteristic values of the products. Also, it is determined whether or not at least a last one of the characteristic values is located within a control region narrower than an allowable region and outside a normal region narrower than the control region. Further, when the successive-decrease tendency has occurred and the last characteristic value is located within the control region outside the normal region, an alarm state is detected.

Citation List

Patent Document

   Patent Document 1: Unexamined Patent Application Publication Number JP, 10-020925
   Patent Document 2: Unexamined Patent Application Publication Number JP, 11-184589

Summary of the Invention

Technical Problem

Since the time delay from anomaly occurrence to its detection, however, varies from signal to signal in some control systems, the system often receives secondary induced anomalous value signals before receiving the signal representing the origin of the anomaly. For such a system, the technique disclosed in Patent Document 1 or 2 possibly makes the system choose a wrong signal for the origin of the anomaly.

It is an object of the present invention to solve the foregoing problem and to provide an information processing system to more accurately know the time at which the signal starts to show an anomaly.

Solution to Problem

The present invention is as defined in the appended independent claims. The system has the following components: a setting unit to set a normal range showing a range of normal values of monitoring target data, which is a time series of signal values, by defining an upper limit and a lower limit; a determination unit to determine whether a monitoring target signal data value is out of the normal range or not and whose output in case of deviation is a "determined time" which is judged to be the time for a monitoring target signal data to turn to be out of the normal range; a detection unit to determine the "start time" that is before the "determined time" entering from the determination unit and which is the time for the monitoring target data to start to show an anomaly on the basis of the "degree of deviation" that is a deviation of the monitoring target signal data value from a mean of multiple learning data which consist of normal value signals from among already-acquired monitoring target signal data.

Advantageous Effects of the Invention

According to the present invention, it is possible to more accurately determine the time at which the signal starts to show an anomaly.

Brief Description of the Drawings

Fig. 1 includes a block diagram showing a configuration of an information processing system of Embodiment 1.
FIG. 2 shows a graph in which learning data of Embodiment 1 is drawn.
FIG. 3 shows a typical way to define a normal range based on the learning data of Embodiment 1.
Fig. 4 is a flowchart showing a flow of a process for a setting unit of Embodiment 1 to form a band model.
Fig. 5 is a graph showing an example of a monitoring target signal of Embodiment 1 turning to be out of the normal range.
Fig. 6 is a graph showing the time at which a monitoring target signal of Embodiment 1 turns to be away from the average behavior.
Fig. 7 is a graph showing an example of D(t), the degree of deviation of Embodiment 1.
Fig. 8 is a graph showing an example of a normal range for the monitoring target data of Embodiment 1.
Fig. 9 is a graph showing an example of a band model with a constant width of Embodiment 1.
Fig. 10 is a block diagram showing a configuration of an information processing system of Embodiment 2.
Fig. 11 is an illustration showing a typical configuration of an information system of Embodiment 2.
Fig. 12 is a block diagram showing a configuration of an information processing system of Embodiment 3.
Fig. 13 is an illustration showing typical screen displays that a display unit of Embodiment 3 displays.
Fig. 14 is a block diagram showing a hardware configuration of the information processing system of Embodiment 1.

Description of Embodiments

Embodiment 1

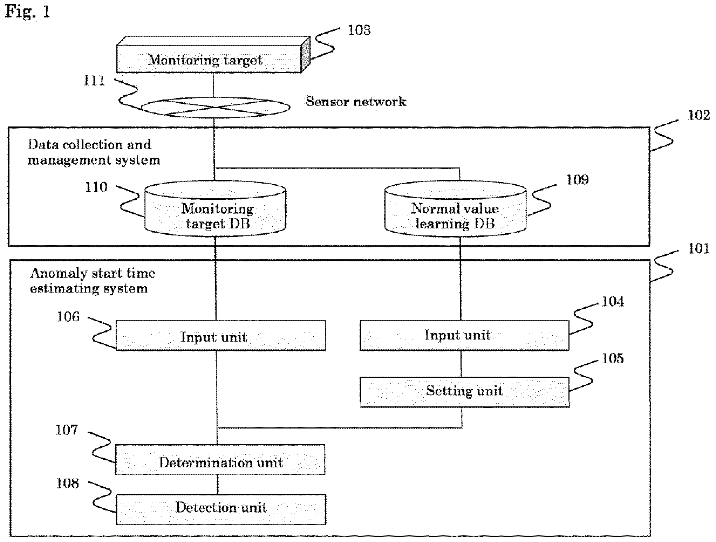

Fig. 1 includes a block diagram showing a configuration of an information processing system 101 of Embodiment 1. As an example of a means of collecting data from a system to be monitored, a typical configuration of a data collection and management system 102 is also shown with a monitoring target 103. The data collection and management system 102 manages data collected from the monitoring target 103 via a sensor network 111.

The information processing system 101 as an anomaly start time estimating system includes a first input unit 104, a setting unit 105, a second input unit 106, a determination unit 107, and a detection unit 108. It is possible to realize the first input unit 104 and the second input unit 106 as one input unit.

The data collection and management system 102 includes, for example, a normal value learning database (hereinafter referred to as a normal value learning DB) 109 and a monitoring target database (hereinafter referred to as a monitoring target DB) 110. Another possible configuration is to unify the normal value learning DB and the monitoring target DB as one to manage, to divide them into three or more distributed DBs (Data Bases) to manage, or to use a file structure instead of DB structure to manage the data.

The normal value learning DB 109 keeps normal value data as learning data from among already-acquired monitoring target data. The normal value learning DB 109 continuously adds monitoring target data judged to be normal by the information processing system of the present invention as learning data. It is possible to keep the data that is judged to be normal by the existing method from among the monitoring target data acquired in the past as learning data.

Particularly at the time of introducing the information processing system of the present invention, since there is no monitoring target data judged to be normal by the information processing system of the present invention, the normal value learning DB 109 should keep data judged to be normal by the existing method as learning data. One of the existing methods is, for example, to judge a data value within the range whose upper limit and lower limit are those of a control system to be monitored as normal. Another is to determine it by a person.

It is also possible for the normal value learning DB 109 to add the data judged to be normal by the existing method to learning data for some specified period at the beginning, and thereafter to add the data judged to be normal by the information processing system of the present invention as learning data.

It is possible for the normal value learning DB 109 to be designed to delete old data. For example, when the component of the system to be monitored is updated and old data turns to be unnecessary, the normal value learning DB 109 deletes the old data. It is also possible to delete old data when the size of the learning data set exceeds the required size.

Another possible way is to provide a data server to keep the data judged to be normal at some other location than that of the data collection and management system 102, such as in the system to be monitored, for the normal value learning DB 109 to keep indices for the data kept in the data server instead of keeping the data itself.

The monitoring target 103 is a control system for an elevator, a plant facility, manufacturing machinery, etc., for example, and is equipped with sensors. The monitoring target 103 may possibly be a unification or a distributed allocation of one or more control systems. It is possible for the monitoring target 103 to be connected directly to the data collection and management system 102 instead of being connected via the sensor network 111.

Next, the processing between the monitoring target 103 and the data collection and management system 102 is described.

A set of signals acquired from the sensors of the monitoring target 103 continuously or intermittently enter the data collection and management system 102 via the sensor network 111. Signal data is a set of signal values acquired from a sensor of the monitoring target 103, and is time-series data. It is possible for the data collection and management system 102 to make the signal data entering the monitoring target DB 110 enter the normal value learning DB 109. It is also possible for the data collection and management system 102 to make the signal data entering the normal value learning DB 109 enter the monitoring target DB 110.

Next, the processing between the data collection and management system 102 and the information processing system 101 is described.

The data collection and management system 102 feeds signal data to be used as normal value references in the detection of an anomaly out of the normal value learning DB 109 into the input unit 104 of the information processing system 101. The data collection and management system 102 feeds signal data which is a target of anomaly detection and is a target of an anomaly start time estimate out of the monitoring target DB 110 into the input unit 106 of the information processing system 101.

Next, basic functions of each component constituting the information processing system 101 are described.

The input unit 104 converts and reconstructs signal data entering from the normal value learning DB 109 of the data collection and management system 102 to feed it into the setting unit 105. The setting unit 105 sets the normal range that is a range of normal values of signal data and which is used for the determination unit 107 to judge if a signal value is anomalous. The input unit 106 converts and reconstructs signal data entering from the monitoring target DB 110 to feed it into the determination unit 107.

The determination unit 107 determines whether a signal data value entering from the input unit 106 is out of the normal range entering from the setting unit 105. The detection unit 108 determines the start time that is the time at which the signal data, whose value is judged to be out of the normal range by the determination unit 107, starts to show an unusual behavior before the time at which its value turns to be out of the normal range.

The input unit 104 converts and reconstructs signal data entering from the normal value learning DB 109 to feed it into the setting unit 105. The conversion of the signal data is, for example, a process to convert the format of the signal data. One example of the format conversion of the signal data is a process of converting the format of the signal data into a predetermined data format. When the format of signal data differs from system to system of the monitoring target 103, the format conversion of the signal data is performed in order for each function of the information processing system 101 to operate normally. Other examples of the format conversion of the signal data are sampling of the signal data points and deletion of unnecessary-time data points in the signal data for the purpose of making the processing faster.

The reconstruction of the signal data set is a process to classify each signal data point into groups under certain conditions when there is one or more input signals, for example. One example of the classification of the signal data is to classify and arrange multiple input signals into groups of the same types of conditions, which are the settings of the control system, conditions of external environment such as outside temperature and humidity, etc. Classifying and arranging the signal data as this example enables the system to improve the anomaly detection accuracy by its comparing a signal data to be monitored with a signal data in the normal range under the same type of condition when the determination unit 107 determines whether the signal data value is out of the normal range. Another example of the classification of the signal data is to divide and arrange multiple input signal data points into groups of the same operation phases such as a boot-phase operation and a daily-phase operation, etc. of a control system.

Next, the hardware configuration of the information processing system 101 is described.

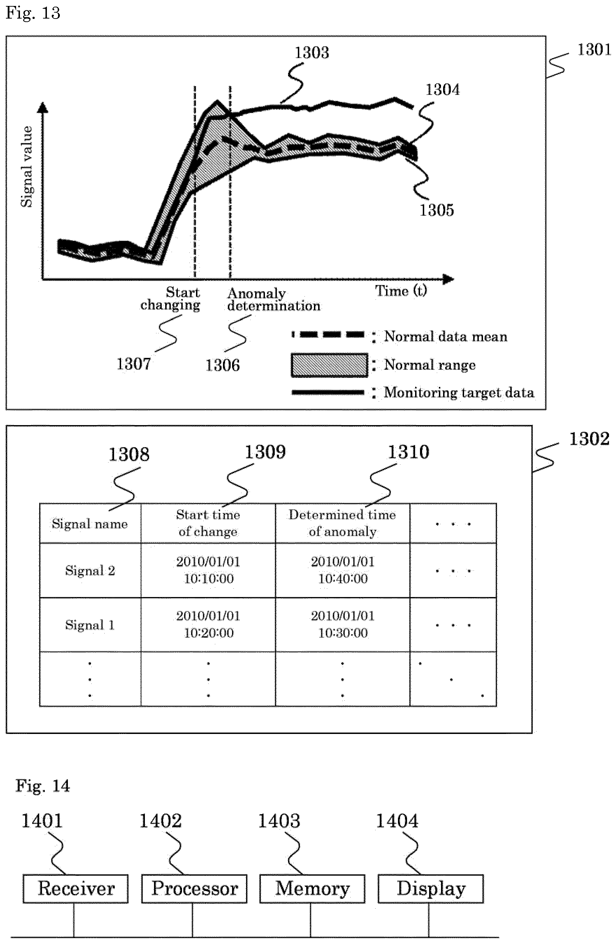

Fig. 14 is a typical hardware configuration of the information processing system 101 of Embodiment 1. The information processing system 101 as an information processing system includes a receiver 1401, a processor 1402, a memory 1403, and a display 1404.

The first input unit 104 and the second input unit 106 are receivers. The setting unit 105, the determination unit 107, and the detection unit 108 are realized by a processing circuit, such as a system LSI (Large Scale Integration) and a CPU on which a program stored in a memory is executed. Another way to realize the above functions is for a plurality of processing circuits to work together. It is possible for the detection unit 108 to feed a computed start time into the display 1404.

Next, an example of setting the normal range is described.

The setting unit 105 sets the signal data normal range, which is used when the determination unit 107 judges if the signal value is anomalous.

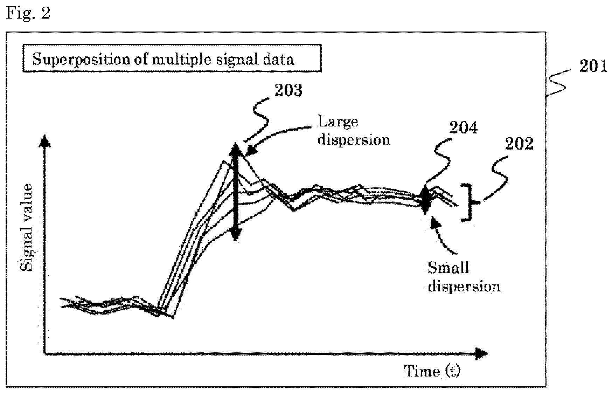

FIG. 2 shows a graph 201 in which the learning data 202 of Embodiment 1 is drawn. The vertical axis of the graph 201 is a signal value axis, and the horizontal axis is a time axis. The learning data 202 includes a plurality of signals of the same condition classified and arranged by the input unit 104. The learning data 202 is a set of signals each having normal values. Though the learning data 202 in the graph includes a plurality of signals, it is possible for each of the signals to be called learning data. The signs 203 and 204 indicate arrows showing the dispersion ranges of the signal values at their respective times.

The learning data 202 in the graph 201 is superposition of a plurality of signals. The setting unit 105 defines a normal range based on the learning data 202. Since the learning data 202 is a data set of the signals of the same condition, each of it roughly shows the same behavior while their value dispersion varies in time as shown by the arrows 203 and 204: the dispersion at time of the arrow 203 is larger than that at time of the arrow 204. This variation of dispersion range in time may occur in a real control system.

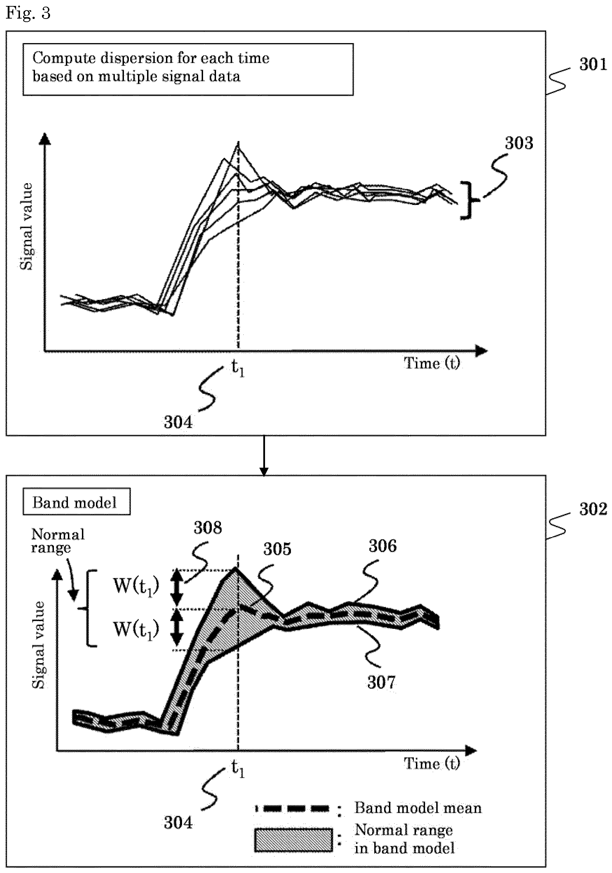

FIG. 3 shows a typical way to define a normal range based on the learning data 303 of Embodiment 1. The sign 301 indicates a graph in which the learning data 303 is drawn. The vertical axis of the graph 301 is a signal value axis, and the horizontal axis is a time axis. The sign 303 indicates the learning data including a plurality of signals. The sign 304 indicates time t1.

The sign 302 indicates a graph showing the normal range covering the learning data 303 in a "band model". The band model enables the system to define a range with its width varying in time. The sign 305 indicates a mean value of the learning data at each time. The value 305 is referred to as a band model mean in the present embodiment. The sign 306 indicates an upper limit in the band model. The sign 307 indicates a lower limit in the band model. The sign 308 shows deviations of the upper limit 306 and the lower limit 307 in the band model from the band model mean 305 at time t1. The deviations 308 are referred to as band model half widths in the present embodiment. Though the deviation of the upper limit in the band model from the band model mean at each time is described to be the same as that of the lower limit in the present embodiment, it is possible to show another description in which they differ.

Next, a way to form a band model is described.

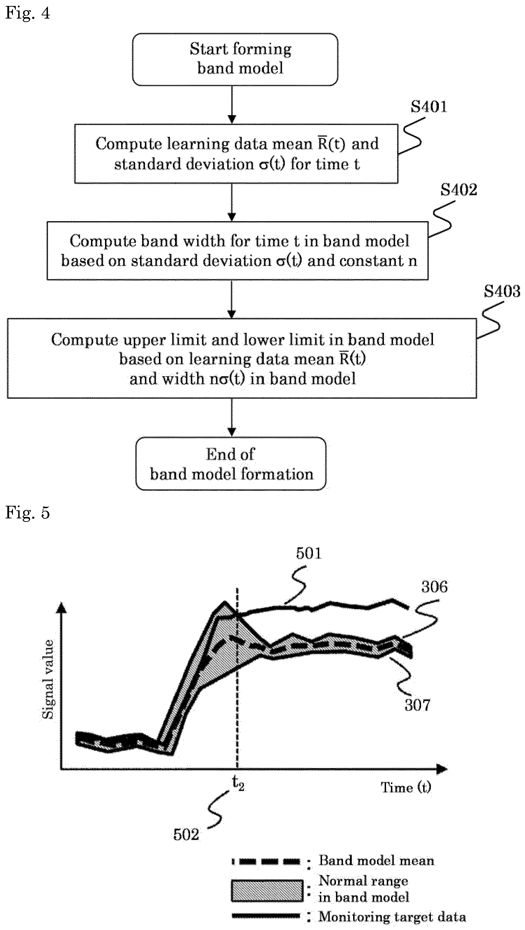

Fig. 4 is a flowchart showing a flow of a process for the setting unit 105 of Embodiment 1 to form a band model. The band model formation procedure consists of the following three steps: a step to compute a mean and a standard deviation of the learning data (step S401), a step to compute the width in the band model (step S402), and a step to compute an upper limit and a lower limit in the band model (step S403).

Next, the details of each step are described.

In step S401, the setting unit 105 computes the mean and the standard deviation of the learning data as basic parameters of the band model. The setting unit 105 computes the mean of the learning data 202 at each time by the formula 1, while the setting unit 105 computes the standard deviation at each time by the formula 2.

[formula 1]

$$\overline{R}(t) = \frac{1}{N} \sum_{i=1}^{N} R_i(t) \ \ldots\ldots \ (\text{formula } 1)$$

[formula 2]

$$\sigma(t) = \sqrt{\frac{1}{N} \sum_{i=1}^{N} \left( R_i(t) - \overline{R}(t) \right)^2} \ \ldots\ldots \ (\text{formula } 2)$$

5

, where

t: time
i: a signal index for each signal in the learning data 202
$R_i(t)$: the signal value of a signal i at time t in the learning data 202
R(t) : the mean of all signal values at time t of the learning data 202
N: the number of signals in the learning data 202

The mean of the learning data 202 at time $t_1$ is denoted as $\overline{R}(t_1)$, while the standard deviation is as $\sigma(t_1)$, for example.
The mean $\overline{R}(t)$ at each time is used for the band model mean 305.
In step S402, the setting unit 105 computes the width in the band model. The setting unit 105 computes W(t), a vertical half width 308 in the band model of the graph 302 by the formula 3.
[formula 3]

$$W(t) = \sigma(t) \times n \dots\dots (\text{formula 3})$$

, where

t: time
n: constant
$\sigma(t)$: the standard deviation of all signal values at time t of the learning data

A constant n is a coefficient to change the vertical half width n $\sigma(t)$ in the band model. The half width 308 at time t1 with a reference sign 304 in the band model is denoted as W(t1), for example.
In step S403, the setting unit 105 computes an upper limit value and a lower limit value in the band model to define the normal range.
The setting unit 105 computes MU(t), which shows an upper limit 306 for each time in the band model, by the formula 4, where the letter U in MU(t) is a subscript in the formula.
[formula 4]

$$M_U(t) = \overline{R}(t) + W(t) \dots\dots (\text{formula 4})$$

The setting unit 105 computes ML(t), which shows a lower limit 307 for each time in the band model, by the formula 5, where the letter L in ML(t) is a subscript in the formula.
[formula 5]

$$M_L(t) = \overline{R}(t) - W(t) \dots\dots (\text{formula 5})$$

, where

t: time
$\overline{R}(t)$ : the mean of all signal values at each time of the learning data 202
W(t): the half width in the band model.

For example, the normal range at time t1 with the sign 304 is a range where the signal value is equal to or more than ML(t1) and is equal to or less than MU(t1). The determination unit 107 determines that the signal is anomalous in case its value turns to be out of this normal range.
The input unit 106 converts and reconstructs signal data entering from the monitoring target DB 110 for the determination unit 107 to process it. The conversion of the signal data is, for example, a process to convert the format of the signal data the same as that at the input unit 104. One example of the format conversion of the signal data is a process of converting the format of the signal data into a predetermined data format. When the format of signal data differs from system to system of the monitoring target 103, the format conversion of the signal data is performed in order for each function of the information processing system 101 to operate normally.

Other examples of the format conversion of the signal data are sampling of the signal data points and deletion of unnecessary-time data points in the signal data for the purpose of making the processing faster. It is possible to adopt the policy common to both the input unit 104 and the input unit 106 on the way of signal data sampling and of the unnecessary-time data point deletion in the signal data, etc. Another typical way of the format conversion of the signal data is to control the period of the monitoring target data to be fed into the determination unit 107 by cutting it into some constant length or by performing a real-time processing by feeding it one by one in time.

As for the reconstruction process of signal data, one possible processing is to extract some signal data classified and arranged by the input unit 104 into a group under the same type of conditions as the input signal data in order to compare the input signal data with the signal data classified and arranged by the input unit 104 under common conditions. Another example of the classification of the signal data is to divide and arrange multiple input signal data points into groups of the same operation phases such as a boot-phase operation and a daily-phase operation, etc. of a control system. It is possible to adopt the policy common to both the input unit 104 and the input unit 106 on the operation phases to be divided into.

Next, the way to determine whether the monitoring target data is out of the normal range is described.

The determination unit 107 determines whether the signal data value entering from the input unit 106 is out of the normal range entering from the setting unit 105.

Fig. 5 is a graph showing an example of monitoring target signal of Embodiment 1 turning to be out of the normal range. The vertical axis of the graph is a signal value axis, and the horizontal axis is a time axis. The sign 501 indicates a monitoring target signal data which is an output of the input unit 106. The sign 502 indicates the "determined time" t2 which is judged by the determination unit 107 to be the time for the monitoring target signal 501 to turn to be out of the normal range.

The determination unit 107 determines that the monitoring target signal 501 is out of the normal range when its value exceeds the upper limit 306 in the band model or it falls below the lower limit 307 in the band model. Fig. 5 shows the monitoring target data 501 exceeds the upper limit 306 in the band model at time t2 with a reference sign 502.

Though the present embodiment uses the band model as an example of a way to define a normal range, it is possible to use another way to define a normal range as far as the way enables the system to determine the time at which the signal turns to be out of the normal range.

The detection unit 108 determines and feeds the "start time" that is before the time at which a signal, which is judged to be out of the normal range by the determination unit 107, turns to be out of the normal range and that is the time at which the signal turns to be away from the average behavior.

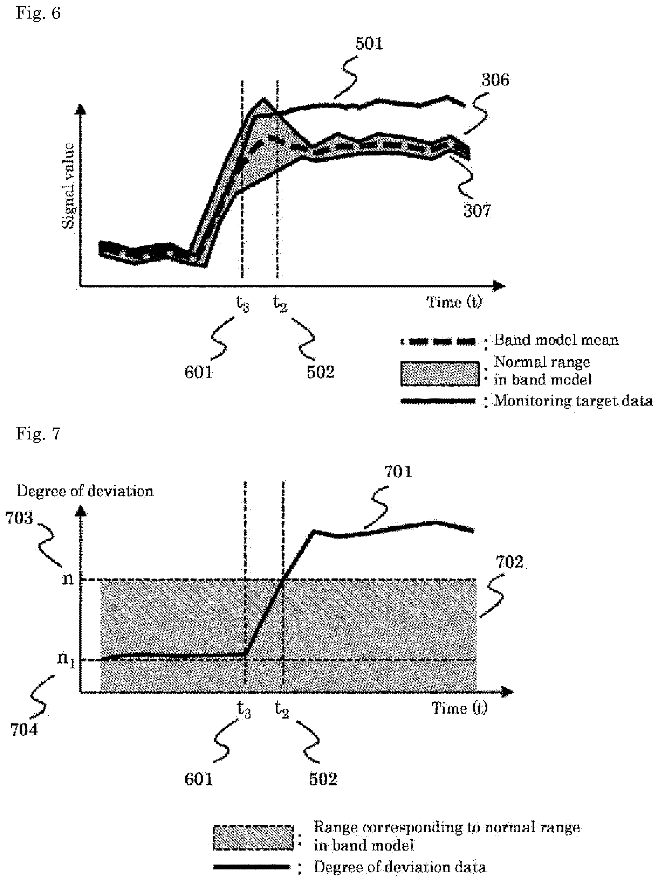

Fig. 6 is a graph showing the time at which a monitoring target signal of Embodiment 1 turns to be away from the average behavior. The vertical axis is a signal value axis, and the horizontal axis is a time axis. The sign 601 indicates the start time t3 at which the signal turns to be away from the average behavior. The start time t3 is before the determined time 502.

The detection unit 108 represents an extent of signal value deviation from the average behavior by the "degree of deviation". It computes the degree of deviation D(t) by the formula 6.

[formula 6]

$$D(t) = \frac{\left| E(t) - \overline{R}(t) \right|}{\sigma(t)} \ ...... \ (\text{formula } 6)$$

, where

 $t$: time
 $E(t)$: the signal value of a monitoring target signal at time $t$
 $\overline{R}(t)$ : the mean of all signal values at time $t$ of the learning data 202
 $\sigma(t)$: the standard deviation of all signal values at time $t$ of the learning data 202

Fig. 7 is a graph showing an example of D(t), the degree of deviation of Embodiment 1. The vertical axis is a degree of deviation value axis, and the horizontal axis is a time axis. The sign 701 indicates the degree of deviation D(t). The sign 702 shows the range corresponding to the normal range in the band model. The sign 703 indicates the constant n which is defined for computing the half width W(t) in the band model. The sign 704 indicates a constant n1 to determine whether the signal value significantly changes or not, where the constant n1 differs from the constant n.

The conventional method uses only the determined time t2 without considering that the time delay of the determined time t2 from the start time t3 differs from signal to signal. To lower the influence of the delay difference of each signal data, the system computes the start time t3. The start time t3 is useful to identify the inferred signal representing the origin of an anomaly, etc.

Next, the way for the detection unit 108 to compute the start time t3 is described. In Fig. 7, the start time t3 is the time before the determined time t2 and is the time at which the degree of deviation starts to show an upward trend after staying nearly unchanged. In the present embodiment, the inclination of the degree of deviation curve is employed for the index of variation to calculate the change amount of the degree of deviation in its behavior. The detection unit 108 computes the index of variation C(t) by the formula 7, where t≥2.

[formula 7]

$$C(t) = \left| D(t) - D(t-1) \right| \dots\dots (\text{formula } 7)$$

, where

$t$: time
$D(t)$: the value of the degree of deviation at time t

It is possible to determine that a signal value is significantly changing if the index of variation C(t) exceeds the first threshold. Then the detection unit 108 computes the start time t3, which is the time at which the index of variation C(t) falls below the first threshold for the first time, back in time from the determined time t2.

The information processing system of the present embodiment includes: the setting unit to set the normal range showing a range of normal values of monitoring target data, which is a time series of signal values, defining an upper limit and a lower limit; the determination unit to determine whether the monitoring target signal data value is out of the normal range or not and whose output in case of deviation is the "determined time" which is judged to be the time for the monitoring target signal data to turn to be out of the normal range; the detection unit to determine the "start time" that is before the "determined time" entering from the determination unit and which is the time for the monitoring target data to start to show an anomaly on the basis of the "degree of deviation" showing a deviation of the monitoring target signal data value from a mean of multiple learning data which consist of normal value signals from among already-acquired monitoring target signal data. This enables the system to more accurately determine the time at which the signal starts to show the anomaly.

It is possible for the setting unit to define a normal range with its width just covering the dispersion of the signal data value at each time by choosing the maximum value among multiple learning data values for the upper limit at each time and by choosing the minimum value among the multiple learning data values for the lower limit at each time. This enables the system to avoid a false positive in detection by choosing a larger threshold value at the time when the dispersion is large, and to avoid a false negative in detection by choosing a smaller threshold value at the time when the dispersion is small.

Since the detection unit determines the "start time" by choosing the time which is before the "determined time" and at which the inclination value of the degree of deviation curve reaches or exceeds the first threshold, it is possible to lower the influence caused by the differences among the time of each signal after the occurrence of the anomaly until the detection of the anomaly.

Another way to define a normal range in the present embodiment is to use a constant value independent of time for the upper limit, the same for the lower limit.

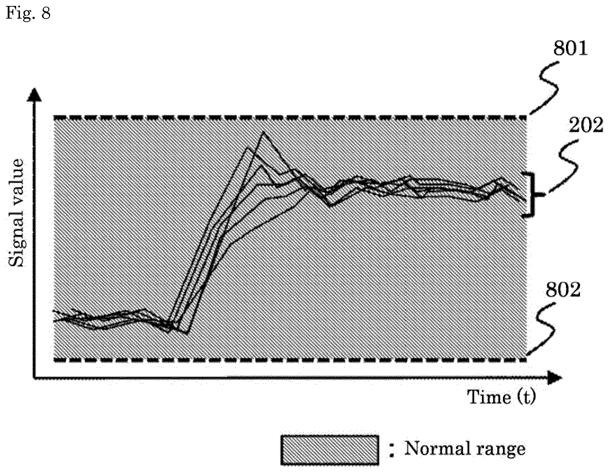

Fig. 8 is a graph showing an example of a normal range for the monitoring target data of Embodiment 1. The learning data 202 are the learning data shown in Fig. 2. The sign 801 indicates an upper limit of the normal range, while the sign 802 indicates a lower limit of the normal range.

A control system to be monitored sometimes has an alarm system to make an alarm notification when monitoring target data value exceeds the upper limit or it falls below the lower limit. It is possible for the setting unit 105 to choose the range that is higher than or equal to the lower limit and is lower than or equal to the upper limit of the alarm system as a normal range, in case the setting unit 105 keeps the upper limit value and the lower limit value of the alarm system after their entering or their being set. In this case, the information processing system 101 does not include the input unit 104.

In this "another" way, the setting unit sets a common upper limit for each time, while it sets a common lower limit for each time. That is, it is possible for the information processing system 101 to use the upper limit and the lower limit of the alarm system in its monitoring target system for those common limits. This enables the system to eliminate steps to set a normal range depending on acquired signal data for the developer to save their time and work.

Next another example of the present embodiment is for the setting unit 105 to use a band model with a constant width where it defines a normal range with a constant width whose center is the mean at each time in the band model. The band model with a constant width is effective in the case when defining the width of the band model properly is difficult due to the small dispersion of the learning data or other cases. Of course, it is possible to choose either of the ordinary band model or the constant width band model depending on the case, or to use both.

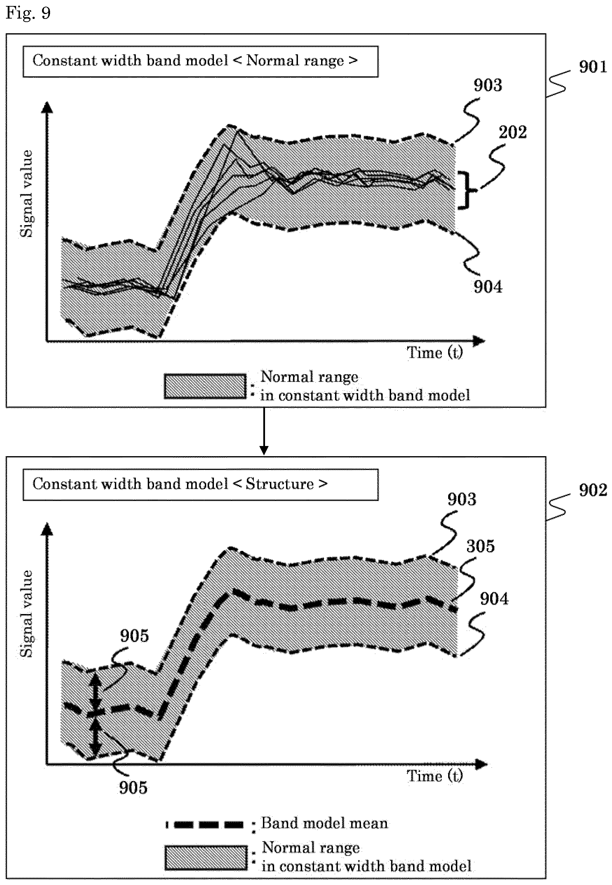

Fig. 9 is a graph showing an example of a band model with a constant width of Embodiment 1. The sign 901 indicates a graph showing the learning data superposed upon a band model with a constant width. The sign 902 indicates a graph showing the structure of the band model with a constant width. The sign 903 indicates an upper limit, the sign 904 indicates a lower limit, and the signs 905 indicate half widths in the band model with a constant width.

The way to define a half width 905 in a constant width band model is, for example, to use a standard deviation of values appearing in time of the band model mean 305 multiplied by some constant, or to use an average over time of the band model mean 305 multiplied by some constant. The setting unit 105 should keep the value of the width or the way to compute it in advance. It is possible to prepare several values for the width per monitoring target system or per acquiring condition of monitoring target data.

As described above, the setting unit defines the upper limit and the lower limit with some constant differences from the mean of the multiple learning data at each time in the present embodiment. This makes it possible to apply the model to learning data of small dispersion, of a small amount of data, or of constant value data. If a normal range were defined depending on these types of learning data, it would cause a lot of wrong anomaly detection for normal monitoring target data because of the small width of the normal range.

In another example of the present embodiment, it is possible for the setting unit 105 to define a normal range in a data space where the number of dimensions is reduced by the method of principal component analysis, independent component analysis, etc. It is also possible for the setting unit 105 to define a normal range for some characteristic quantity derived from a correlation coefficient, a Mahalanobis distance, etc.

In other words, certain characteristic quantities based on the correlation coefficient or the Mahalanobis distances are computed from multiple learning data to define an upper limit and a lower limit according to the range of the characteristic quantities in the present embodiment. This enables the system to save the processing time by dimensionality reduction for large size data. Using such an index of measure other than a deviation in the band model at each time also enables the system to perform a multi-angle evaluation of an anomaly.

In another example of the present embodiment, it is possible for the detection unit 108 to count the case when the degree of deviation D(t) exceeds a second threshold to find a significant change when calculating the start time, at which the signal turns to be away from the average behavior, in addition to the case when the index of variation C(t) exceeds a first threshold, where the second threshold is denoted as constant n1, for example.

This means, to determine a "start time" in this example of the present embodiment is to choose the time at which the inclination of the degree of deviation reaches or exceeds the first threshold or the degree of deviation reaches or exceeds the second threshold where the time is before the "determined time". This may enable the system to avoid calculation failure of a "start time" in the case where a small change rate of the degree of deviation D(t) causes the index of variation C(t) to stay within the range under the first threshold.

In another example of the present embodiment, it is possible for the detection unit 108 to use an index of variation derived from the degree of deviation D(t) by means of a known method of change point detection. An example of such a method of change point detection is the Bayesian change point detection.

Then detecting a start time based on the degree of deviation using the Bayesian change point detection algorithm in the present embodiment enables the system to determine the start time, which is the time at which the signal turns to be away from the average behavior, by a calculation method with multi-angle viewpoints using an index of measure other than the inclination of the degree of deviation D(t).

In another example of the present embodiment, it is possible for the detection unit 108 to compute the start time, which is the time at which the signal turns to be away from the average behavior, after smoothing the degree of deviation D(t) or the index of variation C(t).

Detecting a start time after smoothing the degree of deviation or the inclination of the degree of deviation in the present embodiment may enable the system to avoid wrong determination of the start time, which is the time at which the signal turns to be away from the average behavior, in the case the value of the degree of deviation D(t) often fluctuates.

In the present embodiment, a plurality of ways for the setting unit 105 to define the normal range and a plurality of ways for the detection unit 108 to determine the start time, which is the time at which the signal turns to be away from the average behavior, are described in above examples. It is possible to combine some of the above ways to realize the system.

Embodiment 2

The present embodiment shows a way to infer an anomaly origin representing signal while Embodiment 1 above shows a way to obtain an estimated time of signal anomaly occurrence.

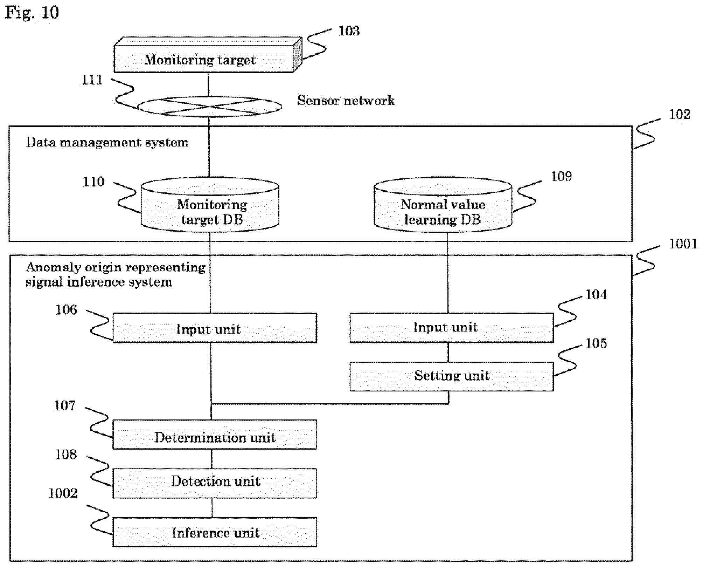

Fig. 10 is a block diagram showing a configuration of an information processing system 1001 of Embodiment 2. The information processing system 1001 is an anomaly origin representing signal inference system, which is a typical application of the information processing system 101 as an anomaly start time estimating system. Fig. 10 also shows a typical configuration of a data collection and management system 102 and a monitoring target 103 as an example of a means of collecting data from a control system to be monitored like Fig. 1.

The difference of the information processing system 1001 from the information processing system 101 is that the former includes an inference unit 1002. The inference unit 1002 identifies and feeds the signal that is inferred to represent the origin of an anomaly from among the multiple signals, entering from the detection unit 108, that are judged to be out of the normal range on the basis of their "start times", which are the times at which each signal turns to be away from the average behavior.

The inference unit 1002 feeds the signal that starts to change earliest from among the signals entering from the detection unit 108 as the anomaly origin representing signal. In order to identify the signal that starts to change earliest, the inference unit 1002 sorts the multiple entering signals whose values are out of the normal range in the ascending order of their "start times" to choose and feed the signal that starts to change earliest. Instead, it is possible to provide an output of the list of the signal names in the ascending order of the "start times".

Typical hardware configuration of the information processing system 1001 is the same as that of Embodiment 1 shown in Fig. 14. The inference unit 1002 is realized by a processing circuit, such as a CPU and a system LSI. It is possible for a plurality of processing circuits to work together to realize it. It is possible for the inference unit 1002 to feed the estimated start time to the display 1404.

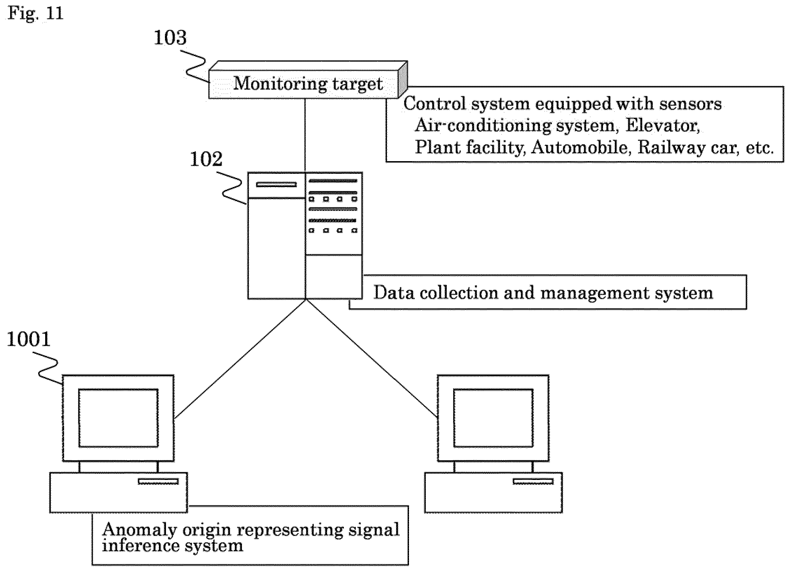

Fig. 11 is an illustration showing a typical configuration of an information system 1100 of Embodiment 2. The information system 1100 is an anomaly origin representing signal inference system which infers the signal representing the origin of an anomaly using the information processing system 1001 as an anomaly origin representing signal inference system. The data collection and management system 102 manages data collected from the monitoring target 103. The monitoring target 103 should be any of the control systems which are equipped with sensors: it is possible to apply the information processing system to an air-conditioning system, an elevator, a plant facility, an automobile, and a railway car, etc.

Instead of using an external data collection and management system 102, it is possible for the information processing system 1001 to include an internal component having the same function as the data collection and management system 102. When the information processing system 1001 is realized by a computer, a data collection and management unit should be installed in the same computer.

As described above, the information processing system of the present embodiment includes the inference unit to draw an inference that the monitoring target data with the earliest start time from among the multiple monitoring target data entering from the detection unit is the anomaly origin representing signal data. This enables the system to infer and identify the anomaly origin representing signal when cause and effect of the anomaly are unknown.

It is possible for the inference unit 1002 in the present embodiment to adopt a way to keep the list that shows physical causes and effects relating signals and to draw an inference to identify the anomaly origin representing signal based on the list besides the above described way. That is, the inference unit 1002 prepares and keeps the list in advance to determine whether the signal entering from the detection unit 108 is in the list or not. When the signal is in the list, the inference unit 1002 infers and identifies the anomaly origin representing signal on the basis of the physical causes and effects. When the signal is not in the list, it infers the anomaly origin representing signal on the basis of the start time, which is the time at which the signal turns to be away from the average behavior. This enables the system to infer and choose the anomaly origin representing signal effectively for the signals whose relating physical causes and effects are known.

Then the inference unit in this example of the present embodiment keeps the list of physical causes and effects relating multiple monitoring target data to infer the anomaly origin representing monitoring target data based on the list when the monitoring target data entering from the detection unit is in the list. This enables the system to effectively infer and choose the anomaly origin representing signal from among the signals whose relating physical causes and effects are known.

Embodiment 3

The present embodiment shows a way to display the determined time which is judged to be the time for the signal to turn to be anomalous and to display the start time which is the time for the signal to turn to be away from the average behavior while Embodiment 2 above shows a way to infer the signal representing the origin of an anomaly.

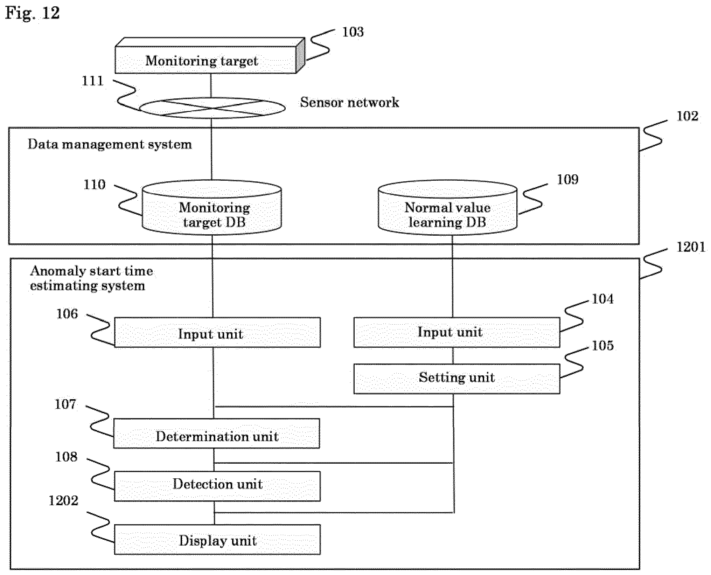

Fig. 12 is a block diagram showing a configuration of an information processing system 1201 of Embodiment 3. The difference of the information processing system 1201 from the information processing system 101 is that the former includes a display unit 1202. The display unit 1202 displays the determined time which is an output of the determination unit 107 and the start time which is an output of the detection unit 108 on a screen.

Fig. 13 is an illustration showing typical screen displays that the display unit 1202 of Embodiment 3 displays. The sign 1301 indicates a graph showing the monitoring target data with their normal range superposed upon them. The sign 1302 indicates a table showing the "start times" for the signals which are judged to be out of the normal range in the ascending order.

The sign 1303 indicates a monitoring target data, the sign 1304 indicates the upper limit of the normal range, and the sign 1305 indicates the lower limit of the normal range. The sign 1306 indicates the determined time which the determination unit 107 judged to be the time for the signal to turn to be anomalous. The sign 1307 indicates the start time detected by the detection unit 108. The sign 1308 indicates the names of the signals judged to be out of the normal range, the sign 1309 indicates their estimated "start times", and the sign 1310 indicates their "determined times" judged to be the time for them to turn to be anomalous, where the signals are from among monitoring target data.

Typical hardware configuration of the information processing system 1201 is the same as the hardware configuration of Embodiment 1 shown in Fig. 14, where the display unit 1202 is the display 1404.

As described above, the information processing system of the present embodiment includes the display unit to display the monitoring target data with its determined time which is the output of the determination unit and with its start time determined by the detection unit on a graph. This enables the system to visualize the deviation of the monitoring target data from the normal range and the time delay of its determined time, which is judged to be the time for the signal data to turn to be anomalous, from its start time.

Since the display unit displays the start times determined by the detection unit for the multiple monitoring target data in the ascending order in this example, it is possible to show candidates of the anomaly origin representing signals in the monitoring target data in the descending order of possibilities of their being the origin of the anomaly.

Reference Signs List

| | |
|---|---|
| 101, 1201 | Information processing system |
| 102 | Data management system |
| 103 | Control system to be monitored |
| 104, 106 | Input unit |
| 105 | Setting unit |
| 107 | Determination unit |
| 108 | Detection unit |
| 109 | Normal value learning DB |
| 110 | Monitoring target DB |
| 111 | Sensor network |
| 201, 301, 302, 901, 902, 1301 | Graph |
| 202, 303 | Learning data |
| 203, 204 | Dispersion range of data |
| 304, 502, 601, 1306, 1307 | Time |
| 305 | Mean |
| 306 | Upper limit |
| 307 | Lower limit |
| 308 | Band model half width |
| 501, 1303 | Monitoring target data |
| 701 | Degree of deviation |
| 702 | Range corresponding to normal range in band model |
| 703, 704 | Constant |
| 801, 903, 1304 | Upper limit |
| 802, 904, 1305 | Lower limit |
| 905 | Band model half width |
| 1001 | Information processing system |
| 1002 | Inference unit |
| 1202 | Display unit |
| 1302 | Table |
| 1308 | Signal name |
| 1309 | Start time |
| 1310 | Determined time |

**Claims**

1.  An information processing system comprising:

    a normal value learning database (109) keeping learning data (202) continuously acquired from a monitoring target (103), wherein said learning data (202) consists of the monitoring data determined as having a normal value for the monitoring target (103);
    a setting unit (105) adapted to form a band model by setting a normal range of the learning data (202) received from the normal value learning database (109), wherein the setting unit (105) is adapted to compute a mean of the learning data (202) and further adapted to compute an upper limit (306, $M_U(t)$) and a lower limit (307, $M_L(t)$) for the normal range;
    a determination unit (107) adapted to determine whether the time series data collected from sensors of the monitoring target (103) are out of the normal range of the band model set by the setting unit (105), and if the time series data are out of the normal range, to output a determined time (t2, 502) corresponding to the time the time series data went out of the normal range; and
    a detection unit (108) adapted to receive the determined time (t2, 502) from the determination unit (107) and adapted to determine a start time (t3, 601) that is before the determined time (t2, 502) and that corresponds to the time when the time series data start to show an anomaly that is detected by the detection unit (108) when the inclination value of the degree of deviation curve reaches or exceeds a first threshold, wherein the deviation represents the deviation of the time series data from the mean (305) of the learning data (202) as computed by the setting unit (105); and
    a display unit adapted to display the time series data with the determined time (t2, 502) and the start time (t3, 601).

2.  The information processing system set forth in claim 1, wherein
    the setting unit chooses to set the maximum value among the multiple learning data values for the upper limit at each of multiple points in time, and chooses to set the minimum value among the multiple learning data values for the lower limit at each of the multiple points in time.

3.  The information processing system set forth in claim 1, wherein
    the setting unit sets the upper limit common to multiple points in time, and sets the lower limit common to multiple points in time.

4.  The information processing system set forth in claim 1, wherein
    the setting unit defines the upper limit and the lower limit with some constant differences from the mean of the multiple learning data at the multiple points in time.

5.  The information processing system set forth in claim 1, wherein
    the setting unit computes characteristic quantities based on a correlation coefficient of the multiple learning data to define the upper limit and the lower limit according to the range of the characteristic quantities.

6.  The information processing system set forth in claim 1, wherein
    the setting unit computes characteristic quantities based on Mahalanobis distances of the multiple learning data to define the upper limit and the lower limit according to the range of the characteristic quantities.

7.  The information processing system set forth in claim 1, wherein
    the detection unit determines the start time after smoothing the inclination of the degree of deviation.

8.  The information processing system set forth in any one of claims 1 to 6, wherein
    the detection unit determines the start time by choosing a time at which the inclination of the degree of deviation reaches or exceeds the first threshold or the degree of deviation reaches or exceeds a second threshold where the time is before the determined time.

9.  The information processing system set forth in claim 8, wherein
    the detection unit determines the start time after smoothing the degree of deviation or the inclination of the degree of deviation.

10. The information processing system set forth in any one of claims 1 to 6, wherein
    the detection unit determines the start time based on the degree of deviation using the Bayesian change point detection algorithm.

11. The information processing system set forth in any one of claims 1 to 10, further comprising an inference unit (1002) to draw an inference that the monitoring target data with the earliest start time from among start times of multiple monitoring target data entering from the detection unit is an anomaly-origin-representing signal.

12. The information processing system set forth in claim 11, wherein the inference unit keeps a list of physical causes and effects relating multiple monitoring target data to infer the anomaly-origin-representing monitoring target data based on the list when the monitoring target data entering from the detection unit is in the list.

13. The information processing system set forth in any one of claims 1 to 10, wherein the display unit is adapted to display monitoring target data with the determined time thereof which is an output of the determination unit and with the start time thereof determined by the detection unit on a graph.

14. The information processing system set forth in any one of claims 1 to 10, wherein the display unit is adapted to display the start times for multiple monitoring target data, determined by the detection unit.

15. An information processing method comprising:

continuously acquiring learning data (202) from a monitoring target (103) in a normal value learning database (109), wherein said learning data (202) consists of the monitoring data determined as having a normal value for the monitoring target (103);

forming by a setting unit (105) a band model by setting a normal range of the learning data (202) received from the normal value learning database (109), wherein the setting unit (105) computes a mean of the learning data (202) and further computes an upper limit (306, Mu(t)) and a lower limit (307, $M_L$(t)) for the normal range;

determining by a determination unit (107) whether the time series data collected from sensors of the monitoring target (103) are out of the normal range of the band model set by the setting unit (105), and if the time series data are out of the normal range, outputting by the determination unit (107) a determined time (t2, 502) corresponding to the time the time series data went out of the normal range; and

receiving by a detection unit (108) the determined time (t2, 502) from the determination unit (107) and determining a start time (t3, 601) that is before the determined time (t2, 502) and that corresponds to the time when the time series data start to show an anomaly when the inclination value of the degree of deviation curve reaches or exceeds a first threshold, wherein the deviation represents the deviation of the time series data from the mean (305) of the learning data (202) as computed by the setting unit (105); and

displaying the time series data with the determined time (t2, 502) and the start time (t3, 601).

**Patentansprüche**

1. Informationsverarbeitungssystem, umfassend:

eine Normalwert-Lerndatenbank (109), die Lerndaten (202) enthält, die kontinuierlich von einem Überwachungsziel (103) erworben werden, wobei die Lerndaten (202) aus den Überwachungsdaten bestehen, die ermittelt wurden, einen Normalwert für das Überwachungsziel (103) aufzuweisen;

eine Einstelleinheit (105), die ausgelegt ist, durch Einstellen eines Normalbereichs der von der Normalwert-Lerndatenbank (109) empfangenen Lerndaten (202) ein Bandmodell auszubilden, wobei die Einstelleinheit (105) ausgelegt ist, einen Mittelwert der Lerndaten (202) zu errechnen, und ferner ausgelegt ist, eine Obergrenze (306, $M_U$(t)) und eine Untergrenze (307, $M_L$(t)) für den Normalbereich zu errechnen;

eine Ermittlungseinheit (107), die ausgelegt ist, zu ermitteln, ob die von den Sensoren des Überwachungsziels (103) gesammelten Zeitreihendaten außerhalb des Normalbereichs des durch die Einstelleinheit (105) eingestellten Bandmodells liegen, und, wenn die Zeitreihendaten außerhalb des Normalbereichs liegen, eine ermittelte Zeit (t2, 502) auszugeben, die dem Zeitpunkt entspricht, zu dem die Zeitreihendaten außerhalb des Normalbereichs lagen; und

eine Erfassungseinheit (108), die ausgelegt ist, die ermittelte Zeit (t2, 502) von der Ermittlungseinheit (107) zu empfangen und ausgelegt ist, eine Startzeit (t3, 601) zu ermitteln, die vor der ermittelten Zeit (t2, 502) liegt und die dem Zeitpunkt entspricht, zu dem die Zeitreihendaten beginnen, eine Anomalie zu zeigen, die von der Erfassungseinheit (108) erfasst wird, wenn der Neigungswert der Abweichungsgradkurve einen ersten Schwellenwert erreicht oder überschreitet, wobei die Abweichung die Abweichung der Zeitreihendaten von dem Mittelwert (305) der Lerndaten (202) darstellt, wie durch die Einstelleinheit (105) errechnet; und
eine Anzeigeeinheit, die ausgelegt ist, die Zeitreihendaten mit der ermittelten Zeit (t2, 502) und der Startzeit (t3, 601) anzuzeigen.

2. Informationsverarbeitungssystem nach Anspruch 1, wobei
die Einstelleinheit wählt, den Maximalwert unter den mehreren Lerndatenwerten für die Obergrenze zu jedem der mehreren Zeitpunkte einzustellen und wählt, den Minimalwert unter den mehreren Lerndatenwerten für die Untergrenze zu jedem der mehreren Zeitpunkte einzustellen.

3. Informationsverarbeitungssystem nach Anspruch 1, wobei
die Einstelleinheit die Obergrenze einstellt, die mehreren Zeitpunkten gemeinsam ist, und die Untergrenze einstellt, die mehreren Zeitpunkten gemeinsam ist.

4. Informationsverarbeitungssystem nach Anspruch 1, wobei
die Einstelleinheit die Obergrenze und die Untergrenze mit einigen konstanten Abweichungen vom Mittelwert der mehreren Lerndaten zu den mehreren Zeitpunkten definiert.

5. Informationsverarbeitungssystem nach Anspruch 1, wobei
die Einstelleinheit die charakteristischen Mengen auf Grundlage eines Korrelationskoeffizienten der mehreren Lerndaten errechnet, um die Obergrenze und die Untergrenze gemäß dem Bereich der charakteristischen Mengen zu definieren.

6. Informationsverarbeitungssystem nach Anspruch 1, wobei
die Einstelleinheit die charakteristischen Mengen auf Grundlage von Mahalanobis-Abständen der mehreren Lerndaten errechnet, um die Obergrenze und die Untergrenze gemäß dem Bereich der charakteristischen Mengen zu definieren.

7. Informationsverarbeitungssystem nach Anspruch 1, wobei
die Erfassungseinheit die Startzeit nach Glättung der Neigung des Abweichungsgrads ermittelt.

8. Informationsverarbeitungssystem nach einem der Ansprüche 1 bis 6, wobei
die Erfassungseinheit die Startzeit durch Wählen einer Zeit, zu der die Neigung des Abweichungsgrades den ersten Schwellenwert erreicht oder überschreitet oder der Abweichungsgrad einen zweiten Schwellenwert erreicht oder überschreitet, bei dem die Zeit vor der ermittelten Zeit liegt, ermittelt.

9. Informationsverarbeitungssystem nach Anspruch 8, wobei
die Erfassungseinheit die Startzeit nach Glättung des Abweichungsgrads oder der Neigung des Abweichungsgrads ermittelt.

10. Informationsverarbeitungssystem nach einem der Ansprüche 1 bis 6, wobei die Erfassungseinheit die Startzeit auf Grundlage des Abweichungsgrads unter Verwendung des Bayesschen Änderungspunkt-Erfassungsalgorithmus ermittelt.

11. Informationsverarbeitungssystem nach einem der Ansprüche 1 bis 10, ferner umfassend
eine Inferenzeinheit (1002), um einen Rückschluss zu ziehen, dass die Überwachungszieldaten mit der frühesten Startzeit unter den Startzeiten mehrerer Überwachungszieldaten, die von der Erfassungseinheit erfasst werden, ein Anomalieursprung-repräsentierendes Signal sind.

12. Informationsverarbeitungssystem nach Anspruch 11, wobei
die Inferenzeinheit eine Liste von physischen Ursachen und Wirkungen enthält, die sich auf mehrere Überwachungszieldaten beziehen, um auf Grundlage der Liste auf die Anomalieursprung-repräsentierenden Überwachungszieldaten schließen zu können, wenn die von der Erfassungseinheit erfassten Überwachungszieldaten in der Liste sind.

13. Informationsverarbeitungssystem nach einem der Ansprüche 1 bis 10, wobei
die Anzeigeeinheit ausgelegt ist, Überwachungszieldaten mit der davon ermittelten Zeit, was eine Ausgabe der Ermittlungseinheit ist, und mit der davon ermittelten Startzeit, die durch die Erfassungseinheit ermittelt wird, auf einem Graphen anzuzeigen.

**14.** Informationsverarbeitungssystem nach einem der Ansprüche 1 bis 10, wobei
die Anzeigeeinheit ausgelegt ist, die Startzeiten für mehrere durch die Erfassungseinheit ermittelte Überwachungszieldaten anzuzeigen.

**15.** Informationsverarbeitungsverfahren, umfassend:

kontinuierliches Erwerben von Lerndaten (202) von einem Überwachungsziel (103) in einer Normalwert-Lerndatenbank (109), wobei die Lerndaten (202) aus den Überwachungsdaten bestehen, die ermittelt wurden, einen
Normalwert für das Überwachungsziel (103) aufzuweisen;
Ausbilden, durch eine Einstelleinheit (105), eines Bandmodells durch Einstellen eines Normalbereichs der von
der Normalwert-Lerndatenbank (109) empfangenen Lerndaten (202), wobei die Einstelleinheit (105) einen Mittelwert der Lerndaten (202) errechnet und ferner eine Obergrenze (306, $M_U(t)$) und eine Untergrenze (307,
$M_L(t)$) für den Normalbereich errechnet;
Ermitteln, durch eine Ermittlungseinheit (107), ob sich die von den Sensoren des Überwachungsziels (103)
gesammelten Zeitreihendaten außerhalb des Normalbereichs des durch die Einstelleinheit (105) eingestellten
Bandmodells befinden, und wenn sich die Zeitreihendaten außerhalb des Normalbereichs befinden, Ausgeben,
durch die Ermittlungseinheit (107), einer ermittelten Zeit (t2, 502) entsprechend der Zeit, zu der die Zeitreihendaten außerhalb des normalen Bereichs lagen; und
Empfangen, durch eine Erfassungseinheit (108), der ermittelten Zeit (t2, 502) von der Ermittlungseinheit (107)
und Ermitteln einer Startzeit (t3, 601), die vor der ermittelten Zeit (t2, 502) liegt und die dem Zeitpunkt entspricht,
zu dem die Zeitreihendaten beginnen, eine Anomalie zu zeigen, wenn der Neigungswert der Abweichungsgradkurve einen ersten Schwellenwert erreicht oder überschreitet, wobei die Abweichung die Abweichung der
Zeitreihendaten von dem Mittelwert (305) der Lerndaten (202) darstellt, wie durch die Einstelleinheit (105)
errechnet; und
Anzeigen der Zeitreihendaten mit der ermittelten Zeit (t2, 502) und der Startzeit (t3, 601).

## Revendications

**1.** Système de traitement d'informations comprenant :

une base de données d'apprentissage de valeur normale (109) qui conserve des données d'apprentissage
(202) acquises en continu à partir d'une cible de surveillance (103), dans lequel lesdites données d'apprentissage
(202) sont constituées des données de surveillance déterminées comme présentant une valeur normale pour
la cible de surveillance (103) ;
une unité de définition (105) apte à former un modèle de bande en définissant une plage normale des données
d'apprentissage (202) reçues en provenance de la base de données d'apprentissage de valeur normale (109),
dans lequel l'unité de définition (105) est apte à calculer une moyenne des données d'apprentissage (202) et
est en outre apte à calculer une limite supérieure (306, $M_U(t)$) ainsi qu'une limite inférieure (307, $M_L(t)$) pour la
plage normale ;
une unité de détermination (107) apte à déterminer si les données de série temporelle collectées à partir de
capteurs de la cible de surveillance (103) sont hors de la plage normale du modèle de bande défini par l'unité
de définition (105), et si les données de série temporelle sont hors de la plage normale, à fournir en sortie un
instant déterminé (t2, 502) correspondant à l'instant où les données de série temporelle sont sorties de la plage
normale ; et
une unité de détection (108) apte à recevoir l'instant déterminé (t2, 502) en provenance de l'unité de détermination (107), et apte à déterminer un instant de début (t3, 601) qui précède l'instant déterminé (t2, 502) et qui
correspond à l'instant où les données de série temporelle commencent à montrer une anomalie qui est détectée
par l'unité de détection (108) lorsque la valeur d'inclinaison de la courbe de degré d'écart atteint ou dépasse
un premier seuil, dans lequel l'écart représente l'écart des données de série temporelle par rapport à la moyenne
(305) des données d'apprentissage (202) telle que calculée par l'unité de définition (105) ; et une unité d'affichage
apte à afficher les données de série temporelle avec l'instant déterminé (t2, 502) et l'instant de début (t3, 601).

**2.** Système de traitement d'informations selon la revendication 1, dans lequel :
l'unité de définition choisit de définir la valeur maximale parmi les multiples valeurs de données d'apprentissage
pour la limite supérieure au niveau de chaque point parmi de multiples points dans le temps, et choisit de définir la valeur minimale parmi les multiples valeurs de données d'apprentissage pour la limite inférieure au niveau de chacun des multiples points dans le temps.

3. Système de traitement d'informations selon la revendication 1, dans lequel :
l'unité de définition définit la limite supérieure commune à de multiples points dans le temps, et définit la limite inférieure commune à de multiples points dans le temps.

4. Système de traitement d'informations selon la revendication 1, dans lequel :
l'unité de définition définit la limite supérieure et la limite inférieure avec quelques différences constantes par rapport à la moyenne des multiples données d'apprentissage au niveau des multiples points dans le temps.

5. Système de traitement d'informations selon la revendication 1, dans lequel :
l'unité de définition calcule des grandeurs caractéristiques sur la base d'un coefficient de corrélation des multiples données d'apprentissage, en vue de définir la limite supérieure et la limite inférieure selon la plage des grandeurs caractéristiques.

6. Système de traitement d'informations selon la revendication 1, dans lequel :
l'unité de définition calcule des grandeurs caractéristiques sur la base de distances de Mahalanobis des multiples données d'apprentissage, en vue de définir la limite supérieure et la limite inférieure conformément à la plage des grandeurs caractéristiques.

7. Système de traitement d'informations selon la revendication 1, dans lequel :
l'unité de détection détermine l'instant de début après avoir lissé l'inclinaison du degré d'écart.

8. Système de traitement d'informations selon l'une quelconque des revendications 1 à 6, dans lequel :
l'unité de détection détermine l'instant de début en choisissant un instant où l'inclinaison du degré d'écart atteint ou dépasse le premier seuil, ou un instant où le degré d'écart atteint ou dépasse un second seuil, où l'instant est antérieur à l'instant déterminé.

9. Système de traitement d'informations selon la revendication 8, dans lequel :
l'unité de détection détermine l'instant de début après le lissage du degré d'écart ou de l'inclinaison du degré d'écart.

10. Système de traitement d'informations selon l'une quelconque des revendications 1 à 6, dans lequel :
l'unité de détection détermine l'instant de début sur la base du degré d'écart, en faisant appel à l'algorithme de détection de points de rupture bayésien.

11. Système de traitement d'informations selon l'une quelconque des revendications 1 à 10, comprenant en outre :
une unité d'inférence (1002) destinée à déduire une inférence selon laquelle les données de cible de surveillance présentant l'instant de début le plus récent parmi les instants de début de multiples données de cible de surveillance provenant de l'unité de détection correspondent à un signal de représentation d'origine d'anomalie.

12. Système de traitement d'informations selon la revendication 11, dans lequel :
l'unité d'inférence conserve une liste de causes et d'effets physiques se rapportant à de multiples données de cible de surveillance afin de déduire les données de cible de surveillance de représentation d'origine d'anomalie sur la base de la liste, lorsque les données de cible de surveillance provenant de l'unité de détection sont dans la liste.

13. Système de traitement d'informations selon l'une quelconque des revendications 1 à 10, dans lequel :
l'unité d'affichage est apte à afficher, sur un graphique, les données de cible de surveillance avec l'instant déterminé connexe correspondant à une sortie de l'unité de détermination et avec l'instant de début connexe déterminé par l'unité de détection.

14. Système de traitement d'informations selon l'une quelconque des revendications 1 à 10, dans lequel :
l'unité d'affichage est apte à afficher les instants de début de multiples données de cible de surveillance, déterminés par l'unité de détection.

15. Procédé de traitement d'informations comprenant les étapes ci-dessous consistant à :

acquérir en continu des données d'apprentissage (202) à partir d'une cible de surveillance (103) dans une base de données d'apprentissage de valeur normale (109), dans lequel lesdites données d'apprentissage (202) sont constituées des données de surveillance déterminées comme présentant une valeur normale pour la cible de surveillance (103) ;

former, par le biais d'une unité de définition (105), un modèle de bande, en définissant une plage normale des données d'apprentissage (202) reçues en provenance de la base de données d'apprentissage de valeur normale (109), dans lequel l'unité de définition (105) calcule une moyenne des données d'apprentissage (202) et calcule en outre une limite supérieure (306, $M_U(t)$) et une limite inférieure (307, $M_L(t)$) pour la plage normale ;

déterminer, par le biais d'une unité de détermination (107), si les données de série temporelle collectées à partir de capteurs de la cible de surveillance (103) sont hors de la plage normale du modèle de bande défini par l'unité de définition (105), et si les données de série temporelle sont hors de la plage normale, fournir en sortie, par le biais d'une unité de détermination (107), un instant déterminé (t2, 502) correspondant à l'instant où les données de série temporelle sont sorties de la plage normale ; et

recevoir, par le biais d'une unité de détection (108), l'instant déterminé (t2, 502) en provenance de l'unité de détermination (107), et déterminer un instant de début (t3, 601) qui précède l'instant déterminé (t2, 502) et qui correspond à l'instant où les données de série temporelle commencent à montrer une anomalie lorsque la valeur d'inclinaison de la courbe de degré d'écart atteint ou dépasse un premier seuil, dans lequel l'écart représente l'écart des données de série temporelle par rapport à la moyenne (305) des données d'apprentissage (202) telle que calculée par l'unité de définition (105) ; et

afficher les données de série temporelle avec l'instant déterminé (t2, 502) et l'instant de début (t3, 601).

EP 3 249 483 B1

Fig. 1

Fig. 2

Fig. 3

Compute dispersion for each time based on multiple signal data — 301

Signal value / Time (t), 303, 304, $t_1$

Band model — 302

Normal range, $W(t_1)$, $W(t_1)$, Signal value, 308, 305, 306, 307, 304, $t_1$, Time (t)

— — — : Band model mean

▨ : Normal range in band model

Fig. 4

```
          ┌──────────────────────┐
          │    Start forming     │
          │     band model       │
          └──────────────────────┘
                     │
                     ▼
  ┌────────────────────────────────────────┐    S401
  │  Compute learning data mean R̄(t) and     │
  │    standard deviation σ(t) for time t    │
  └────────────────────────────────────────┘
                     │
                     ▼
  ┌────────────────────────────────────────┐    S402
  │  Compute band width for time t in band model │
  │ based on standard deviation σ(t) and constant n │
  └────────────────────────────────────────┘
                     │
                     ▼
  ┌────────────────────────────────────────┐    S403
  │  Compute upper limit and lower limit in band model │
  │       based on learning data mean R̄(t)       │
  │         and width nσ(t) in band model        │
  └────────────────────────────────────────┘
                     │
                     ▼
          ┌──────────────────────┐
          │        End of        │
          │  band model formation │
          └──────────────────────┘
```

Fig. 5

- ▬ ▬ ▬ : Band model mean
- ▨ : Normal range in band model
- ▬▬▬ : Monitoring target data

Fig. 6

- - - - : Band model mean

▨ : Normal range in band model

━━ : Monitoring target data

Fig. 7

▨ : Range corresponding to normal range in band model

━━ : Degree of deviation data

Fig. 8

: Normal range

Fig. 9

Constant width band model < Normal range >                901

903
202

Signal value

904

Time (t)

: Normal range
in constant width band model

Constant width band model < Structure >                902

903
305

Signal value

904

905

905

Time (t)

: Band model mean
: Normal range
in constant width band model

Fig. 10

- 103 — Monitoring target
- 111 — Sensor network
- 102 — Data management system
  - 110 — Monitoring target DB
  - 109 — Normal value learning DB
- 1001 — Anomaly origin representing signal inference system
  - 106 — Input unit
  - 104 — Input unit
  - 105 — Setting unit
  - 107 — Determination unit
  - 108 — Detection unit
  - 1002 — Inference unit

Fig. 11

103

Monitoring target

Control system equipped with sensors
Air-conditioning system, Elevator,
Plant facility, Automobile, Railway car, etc.

102

Data collection and management system

1001

Anomaly origin representing signal
inference system

EP 3 249 483 B1

Fig. 12

Monitoring target — 103

111 — Sensor network

Data management system — 102

110 — Monitoring target DB

Normal value learning DB — 109

Anomaly start time estimating system — 1201

106 — Input unit

Input unit — 104

Setting unit — 105

107 — Determination unit

108 — Detection unit

1202 — Display unit

EP 3 249 483 B1

Fig. 13

Start
changing

Anomaly
determination

Time (t)

1303
1304
1305

- - - - : Normal data mean

: Normal range

: Monitoring target data

1307      1306

1301

1302

1308        1309         1310

| Signal name | Start time of change | Determined time of anomaly | · · · |
|---|---|---|---|
| Signal 2 | 2010/01/01 10:10:00 | 2010/01/01 10:40:00 | · · · |
| Signal 1 | 2010/01/01 10:20:00 | 2010/01/01 10:30:00 | · · · |
| · · · | · · · | · · · | · · · |

Fig. 14

| 1401 | 1402 | 1403 | 1404 |
|---|---|---|---|
| Receiver | Processor | Memory | Display |

**EP 3 249 483 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009076634 A1
- US 2006206230 A1
- JP 10020925 A
- JP 11184589 A